# EUROPEAN PATENT SPECIFICATION

(11) **EP 1 442 228 B1**
(45) Date of publication and mention of the grant of the patent: **12.07.2006**
(21) Application number: 02774954.8
(22) Date of filing: 25.10.2002
(51) Int. Cl.: F16F 15/131

(54) **TWIN MASS FLYWHEEL**
ZWEIMASSENSCHWUNGRAD
VOLANT DEUX MASSES

(30) Priority: 07.11.2001 GB 0126726
(43) Date of publication of application: 04.08.2004
(73) Proprietor: Automotive Products Group Limited, Leamington Spa, Warwickshire CV31 3ZL (GB)
(72) Inventor: STRUVE, Benjamin Chetwood, Leamington Spa, Warwickshire CV31 1JJ (GB); COOKE, Richard, David, Maitland, Warwick CV34 5HZ (GB); CURTIS, Anthony John, Leamington Spa, Warwickshire CV31 1RU (GB)
(74) Representative: Morrall, Roger
(86) International application number: PCT/GB2002/004871
(87) International publication number: WO 2003/040588

(56) References cited:
- EP-A- 0 724 092
- DE-A- 19 730 844
- US-A- 6 044 727

## Description

This invention relates to twin mass flywheels, hereinafter referred to as of the type specified, which include an input mass for connection with a vehicle engine and an output mass for connection with a vehicle drive line, the input and output masses being relatively rotatable against the action of a damping means to absorb/attenuate torsional vibrations emanating from the engine.

Such twin mass flywheels are well know but due to their cost are currently used primarily on more expensive vehicles where their additional costs can be more easily justified.

EP-A-0724092 discloses such a twin mass flywheel in which an output mass is supported from input mass on an axially extending support hub with the input mass completely enclosing the output mass, the damping means and an associated driven clutch, thus making assembly and access for servicing more difficult.

There is a requirement to provide a simple but effective twin mass flywheel for use on smaller vehicles where cost considerations are more significant.

It is therefore an object of the present invention to provide a twin mass flywheel which is simple in construction and therefore of a lower cost.

Thus according to the present invention there is provided a twin mass flywheel which includes an input mass for connection with a vehicle engine and an output mass for connection with a vehicle driveline, a radially inwardly extending flange secured to an outer peripheral portion of the input mass, torsional damping means acting between the flange and reaction means which rotate with the output mass, and an axially extending support hub secured to an inner peripheral portion of the flange with the output mass supported by bearing means from the hub, the flywheel being characterised in that the flange is located axially between the input and output masses.

The damping means may comprise circumferentially acting spring means acting between the flange and reaction means which rotate with the output mass.

The reaction means may comprise parallel side plates positioned on either side of the flange and which are connected with the output mass.

The connection with the output mass may be via spacer rivets which hold the parallel side plates in a spaced relationship on either side of the flange.
These spacer rivets may extend through circumferentially extending slots in the flange and may also act as end stops limiting the relative rotation of the flywheel masses when the spacer rivets contact ends of the slots.

The twin mass flywheel may also include friction damping means acting to damp relative rotation of the masses.

The friction damping means may comprises axially acting spring means acting between the flange and one of the side plates to bias said one side plate away from the flange and hence draw the other side plate towards the flange, and first and second friction plate means located axially between the other side plate and the flange, said first friction plate means being connected for rotation with the input mass and said second friction plate means being connected for rotation with the output mass, whereby the first and second friction plate means are axially loaded into frictional contact by the axially acting spring means to generate friction damping and relative rotation of the flywheel masses.

The input mass may comprise a first sub-assembly and a second assembly may comprise the output mass, the flange, the support hub, the bearing means and the damping means, the second sub-assembly, in a fully assembled condition, being secured to the first sub-assembly by the fastening means which secure the outer peripheral region of the flange to the input mass.

The second sub-assembly may also include a clutch cover mounted on the output mass, the cover supporting a clutch driven plate, a pressure plate, and spring means for clamping the driven plate between the pressure plate and the output mass.

It will be appreciated that a twin mass flywheel assembled as described above is particularly advantageous in that the second sub-assembly which includes the majority of the twin mass flywheel and the entire associated clutch can be secured to the input flywheel mass by the fastening means alone. This arrangement greatly facilitates assembly of the vehicle on the vehicle production line and subsequent servicing.

The present invention will now be described, by way of example only, with reference to the accompanying drawings in which:-
Figure 1 is an axial section through a twin mass flywheel embodying the present invention;
Figure 2 is a view in the direction of arrow 2-2 of figure 1;
Figure 3 is a scrap view of an alternative fastening links for securing a clutch cover to an output mass of the twin mass flywheel of figure 1;
Figure 4 is an enlarged view of the central portion of figure 1;
Figure 5 is a view of the mounting hub of figure 1 viewed in the direction X of figure 4;
Figure 6 is an axial section of an alternative form of twin mass flywheel embodied in the present invention, and
Figure 7 is a view in the direction of the arrows 7-7 of figure 6.

Referring to the drawings, the twin mass flywheel 10 comprises an input mass 11 and an output mass 12 which are relatively rotatable through a small angular range against a torsional vibration damper 13.

The output mass 12 is supported from the input mass 11 via a plain bearing 14 which is supported on an axially extending hub 15. Hub 15 is itself mounted on a radially inwardly extending flange 16 whose outer peripheral portion 17 is mounted on the outer peripheral portion 18 of input mass 11 via fastening means in the form of bolts 19. The hub 15 is welded at 20 to the inner peripheral portion 21 of flange 16. Plain bearing 14 is of L-shaped form and is non-rotatably mounted on hub 15 and is coated on its radially outer surface 22 with a polymeric bearing material. In fact, any suitable form of plain bearing could be used other suitable forms being, for example, steel backed bronze.

The torsional vibration damper 13 comprises two pairs of compression springs 23 and 24 which are housed in a first series of windows 25 in flange 16 and a second series of windows 26 formed in side plates 27 and 28 positioned on either side of flange 16 and secured to the output mass 12 via spacing rivets 29.

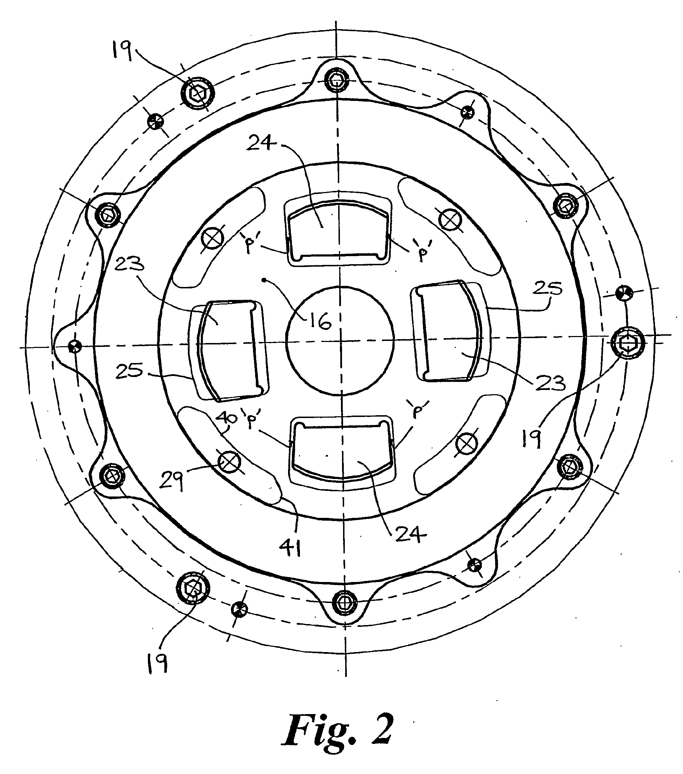

As can be seen from figure 2, the pair of compression springs 23 are a tight fit in their cooperating windows 25 in the flange 16 and also in their windows in the side plates 27 and 28 and are thus compressed on all relative rotational movements between the input and output masses. This pair of springs therefore acts effectively as the idle damping arrangement for the twin mass flywheel and the spring rate is lower than the second pair of springs 24 which act as the main damping springs.

As can be seen also clearly from figure 2, these main damping springs 24 have a small circumferential clearance 'p' at their ends in their windows 25 in a flange 16 and thus the main damping springs 24 do not operate until a given amount of relative rotation has taken place between the input and output masses of the twin mass flywheel. This mount of relative rotation is typically ± 3 degrees.

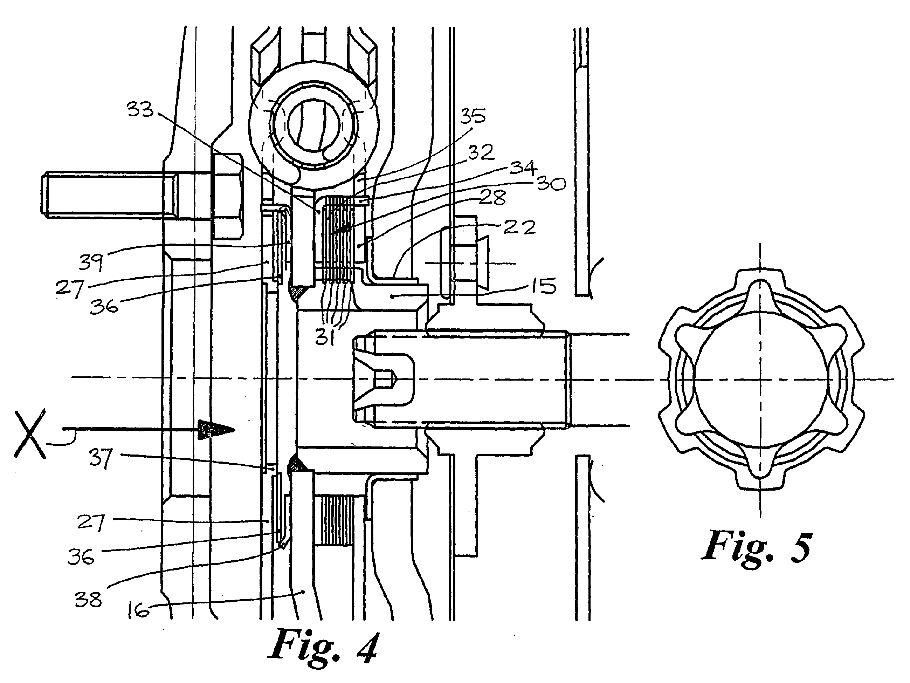

The relative rotation of the input and output masses is also subject to frictional damping by a friction damping means 30. As shown in figure 4, this frictional damping means comprises a first set of friction plates 31 which are splined onto the hub 15 for rotation with the input mass 11 and a second series of friction plates 32 which are splined onto a dish-shaped member 33 having axial projecting portions 34 received in cut-outs 35 in side plate 28 thus rotating with the output mass 12. These two series of interleaved friction plates 31 and 32 are axially loaded by a belleville spring 36 whose inner periphery reacts against a stepped portion 37 of the inner periphery of side plate 27 and whose outer edge reacts against axially projecting lugs 38 formed in an L-shaped pressure plate member which reacts against the lefthand side of the inner peripheral portion of flange 16. Diaphragm spring 36 biases side plate 27 away from flange 16 thereby drawing side plate 28 towards flange 16 and hence compressing the interleaved friction plates 31 and 32 to give the desired frictional damping upon relative rotation of the input and output flywheel masses.

Diaphragm spring 36 is arranged to have a generally flat load/deflection characteristic over its operating range and is supported so that it can act on either side of its flat condition as disclosed and claimed in the Applicant's co-pending UK patent application 0124246.0. This ensures that spring 36 applies a substantially constant axial force throughout its entire operating range and life.

The splining of the first and second series of interleaved friction plates 31 and 32 relative to on the one hand the hub 15 and on the other hand the dished-shaped member 33 may be designed to have no lost motion in a circumferential sense so that the friction forces generated by the friction damper 30 occur immediately any relative rotation of the flywheel masses occurs. Alternatively, one or more of the plates 31,32 may have a designed amount of circumferential lost motion built into its splining arrangements so that its frictional effect may be delayed and it will only become operative after a predetermined amount of relative rotation between the input and output masses. Thus the friction damping characteristics of the friction damper 30 can be tuned to each particular vehicular application of the twin mass flywheel.

The spacing rivets 29 extend through circumferentially extending slots 40 in the flange 16. Thus spacing rivets 29 also act as ultimate rotation stops by abutment with the ends 41 of the slots 40 after a pre-determined amount of relative rotation of the flywheel masses.

A clutch cover 42 is mounted on the output flywheel mass 12 by set screws 43 and carries, in a conventional manner a pressure plate 44 and a diaphragm spring 45 for clamping a clutch driven plate 46 between the pressure plate 44 and the output mass 12. In a conventional manner the driven plate 46 is provided with a drive hub 47 for connection with a gearbox input shaft 48.

In the alternative arrangement shown in figure 3 the clutch cover 42 is rivetted at 49 onto the output flywheel mass 12.

It will be appreciated that the twin mass flywheel described above is constructed in first and second sub-assemblies. The first sub-assembly comprising the input flywheel mass 11 with its associated starter ring 11a. The remainder of the twin mass flywheel comprises a second sub-assembly in the form of flange 16, torsional damper 13, friction damper 30, axial hub 15, main bearing 14, output flywheel mass 12, clutch cover 42, diaphragm spring 45, pressure plate 44, and driven plate 46. This entire second assembly can be mounted on the first assembly simply using the bolts 19, three of which are provided as shown in figure 2. This ability to mount the large second sub-assembly onto the input flywheel mass 11 using three fastening bolts 19 greatly facilitates the assembly of the units on the vehicle production line and also subsequent maintenance of the vehicle.

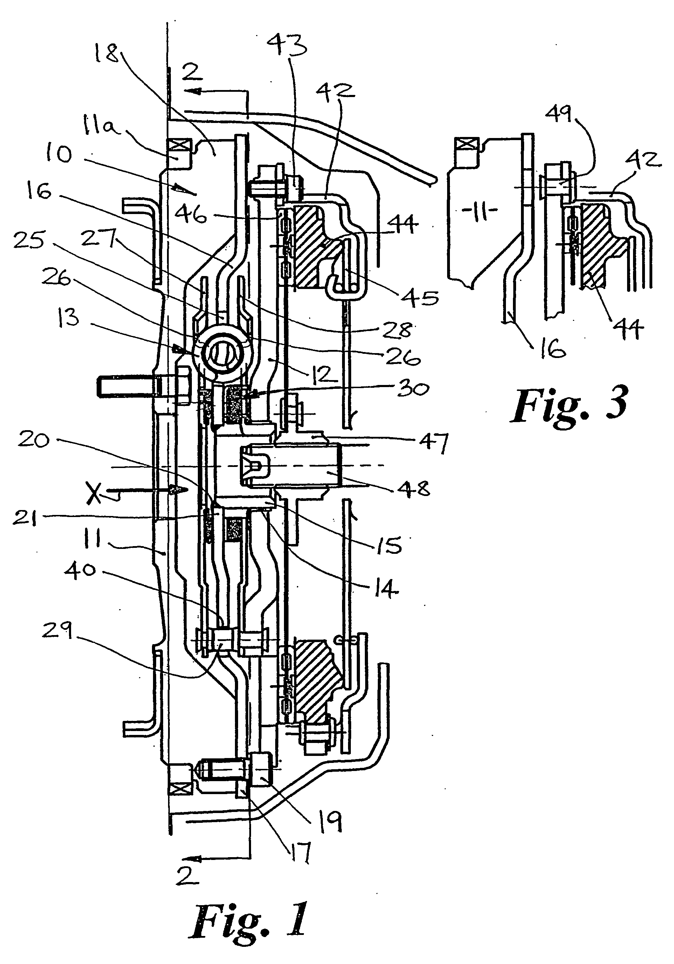

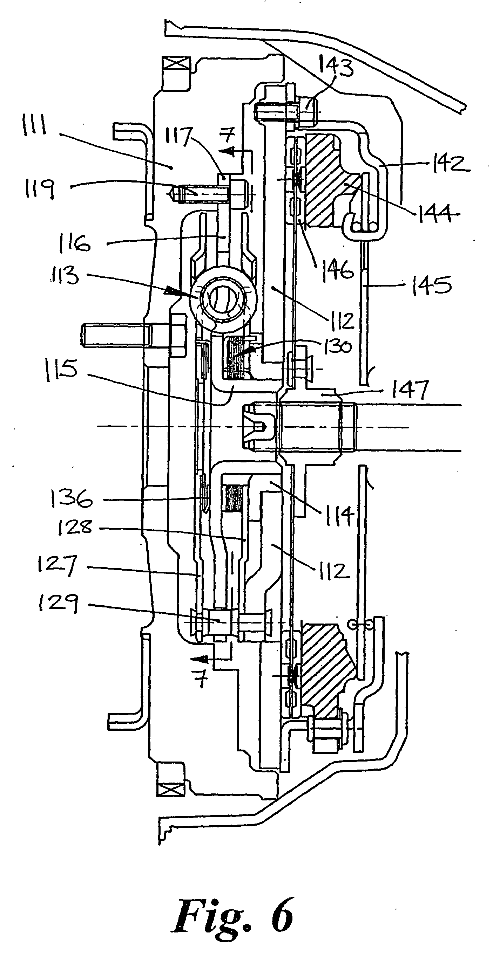

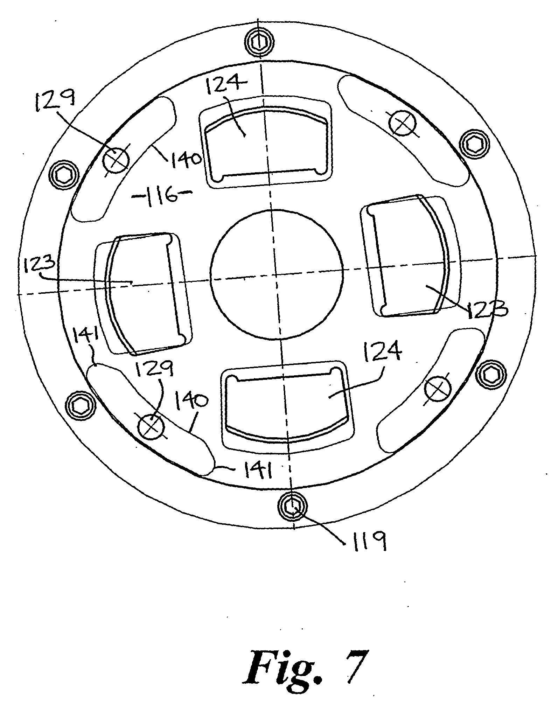

Figures 6 and 7 show an alternative form of twin mass flywheel embodying in the invention in which components having the same function as the components shown in figures 1 to 5 have had their reference numerals increased by 100. The input flywheel mass 111 is of a cast construction and is deeply dished so that flange 116 is secured at an outer peripheral portion 117 by bolts 119 to a shoulder 111a which is deeply recessed within the input mass. Also the output mass 112 is recessed at 111b within the input mass 11. This thus provides a particular compact and well protected design.

Flange 116 has an integrally formed axial extending hub 115 on which the output mass 112 is mounted via a plain bearing 114.

The constructional details of the damper 113 and frictional damping means 130 are the same as previously described with reference to figure 1 etc.

As will be appreciated in the arrangement shown in figure 6, since the bolts 119 are positioned much further radially inward than in figure 1, it is not possible to mount the majority of the twin mass flywheel onto the input mass 111 using the fastening bolts 119 after the assembly of this portion of the twin mass flywheel as a sub-assembly.

The present invention thus provides a simple but efficient twin mass flywheel which not only incorporates the main torsional damping function but also includes a torsional damping feature to cater for idle rattle thus rendering it unnecessary for such torsional damping arrangements to be incorporated in the clutch driven plate which is used with the twin mass flywheel.

Also one of the arrangements described above provides a simple construction enabling the majority of the twin mass flywheel to be assembled as a sub-assembly before its attachment to the input mass of the flywheel using a small number of fasteners.

## Claims

1. A twin mass flywheel (10) which includes an input mass (11) for connection with a vehicle engine and an output mass (12) for connection with a vehicle driveline, a radially inwardly extending flange (16) secured (19) to an outer peripheral portion (18) of the input mass (11), torsional damping means (13) acting between the flange (16) and reaction means (27,28) which rotate with the output mass (12), and an axially extending support hub (15) secured to an inner peripheral portion (21) of the flange (16) with the output mass (12) supported by bearing means (14) from the hub (15), the flywheel being **characterised in that** the flange is located axially between the input and output masses (11,12).

2. A flywheel according to claim 1 in which the damping means (13) comprises circumferentially acting spring means (23,24) acting between the flange (16) and reaction means (27,28) which rotate with the output mass (12).

3. A flywheel according to claim 1 or 2 **characterised in that** the reaction means comprises parallel side plates (27,28) positioned on either side of the flange (16) and which are connected (29) with the output mass (12).

4. A flywheel according to any one of claims 1 to 3 **characterised in that** the connection with the output mass (12) is via spacer rivets (29) which hold the parallel side plates (27,28) in a spaced relationship on either side of the flange (16).

5. A flywheel according to claim 4 **characterised in that** the spacer rivets (29) extend through circumferentially extending slots (40) in the flange (16) may also act as end stops limiting the relative rotation of the flywheel masses (11,12) when the spacer rivets (29) contact ends (41) of the slots (40).

6. A flywheel according to any one of claims 1 to 5 **characterised by** the inclusion of friction damping means (30) acting to damp relative rotation of the masses (11,12).

7. A flywheel according to claim 6 **characterised in that** the friction damping means (30) comprises axially acting spring means (36) acting between the flange (16) and one (27) of the side plates to bias said one side plate (27) away from the flange (16) and hence draw the other side plate (28) towards the flange (16), and first and second friction plate means (31,32) located axially between the other side plate (28) and the flange (16), said first friction plate means (31) being connected for rotation with the input mass (11) and said second friction plate means (32) being connected for rotation with the output mass (12), whereby the first and second friction plate means (31,32) are axially loaded into frictional contact by the axially acting spring means (36) to generate friction damping on relative rotation of the flywheel masses (11,12).

8. A flywheel according to any one of claims 1 to 7 **characterised in that** the input mass (111) is deeply dished with the flange (116) secured (119) to the input mass in a deeply dished location and the output mass (112) is also recessed within the input mass (111).

9. A flywheel according to any one of claims 1 to 8 **characterised in that** the flange (116) and hub (115) are formed as a single piece component.

10. A flywheel according to any one of claims 1 to 9 **characterised in that** the input mass (11) comprises a first sub-assembly, and a second sub-assembly including the output mass (12), the flange(16), support hub (15), bearing means (14) and damping means (13) is secured in an assembled condition to the first sub-assembly by the fastening means (19) which secure the outer peripheral region (17) of the flange (16) to the input mass (11).

11. A flywheel according to claim 10 in which the second sub-assembly also includes a clutch cover (42) mounted (43) on the output mass (12), the cover (42) supporting a clutch driven plate (46), a pressure plate (44), and spring means (45) for clamping the driven plate (46) between the pressure plate (44) and the output mass (12).

## Patentansprüche

1. Zweimassenschwungrad (10), das eine Eingangsmasse (11) zwecks Verbindung mit einem Fahrzeugmotor und eine Ausgangsmasse (12) zwecks Verbindung mit einem Fahrzeugantriebsstrang; einen radial einwärts verlaufenden Flansch (16), der an einem äußeren Randteil (18) der Eingangsmasse (11) befestigt (19) ist, eine Drehdämpfungseinrichtung (13), die zwischen dem Flansch (16) und einer Reaktionseinrichtung (27, 28) wirkt, die sich zusammen mit der Ausgangsmasse (12) dreht, und eine axial verlaufende Tragnabe (15) enthält, die an einem inneren Randteil (21) des Flansches (16) befestigt ist, wobei die Ausgangsmasse (12) durch eine Lagereinrichtung (14) relativ zu der Nabe (15) abgestützt wird, wobei das Schwungrad **dadurch gekennzeichnet** wird, dass der Flansch axial zwischen der Eingangs- und der Ausgangsmasse (11, 12) angeordnet ist.

2. Schwungrad nach Anspruch 1, bei dem die Dämpfungseinrichtung (13) eine in Umfangsrichtung wirkende Federeinrichtung (23, 24) umfasst, die zwischen dem Flansch (16) und der Reaktionseinrichtung (27, 28) wirkt, die sich mit der Ausgangsmasse (12) dreht.

3. Schwungrad nach Anspruch 1 oder 2, **dadurch gekennzeichnet, dass** die Reaktionseinrichtung parallele Seitenscheiben (27, 28) aufweist, die auf jeder Seite des Flansches (16) angeordnet sind und die mit der Ausgangsmasse (12) verbunden (29) sind.

4. Schwungrad nach irgendeinem der Ansprüche 1 bis 3, **dadurch gekennzeichnet, dass** die Verbindung mit der Ausgangsmasse (12) über Distanznieten (29) erfolgt, die die parallelen Seitenscheiben (27, 28) auf Abstand auf jeder Seite des Flansches (16) halten.

5. Schwungrad nach Anspruch 4, **dadurch gekennzeichnet, dass** die Distanznieten (29) sich durch in Umfangsrichtung sich erstreckende Schlitze (40) in dem Flansch (16) erstrecken und auch als Endanschläge wirken können, die die Relativdrehung der Schwungradmassen (11, 12) begrenzen, wenn die Distanznieten (29) Enden (41) der Schlitze (40) berühren.

6. Schwungrad nach irgendeinem der Ansprüche 1 bis 5, **gekennzeichnet durch** den Einschluss von einer Reibungsdämpfungseinrichtung (30), die zum Dämpfen der Relativdrehung der Massen (11, 12) wirkt.

7. Schwungrad nach Anspruch 6, **dadurch gekennzeichnet, dass** die Reibungsdämpfungseinrichtung (30) eine axial wirkende Federeinrichtung (36), die zwischen dem Flansch (16) und einer (27) der Seitenscheiben wirkt, um die eine Seitenscheibe (27) von dem Flansch (16) weg zu drücken und somit die andere Seitenscheibe (28) in Richtung auf den Flansch (16) zu ziehen, und erste und zweite Reibungsscheibeneinrichtungen (31, 32) aufweist, die axial zwischen der anderen Seitenscheibe (28) und dem Flansch (16) angeordnet sind, wobei die erste Reibungsscheibeneinrichtung (31) zwecks Drehung mit der Eingangsmasse (11) verbunden ist, und die zweite Reibungsscheibeneinrichtung (32) zwecks Drehung mit der Ausgangsmasse (12) verbunden ist, wodurch die ersten und zweiten Reibungsscheibeneinrichtungen (31, 32) axial in Reibungskontakt durch die axial wirkende Federeinrichtung (36) gespannt werden, um eine Reibungsdämpfung der Relativdrehung der Schwungradmassen (11, 12) zu erzeugen.

8. Schwungrad nach irgendeinem der Ansprüche 1 bis 7, **dadurch gekennzeichnet, dass** die Eingangsmasse (111) die Form einer tiefen Schale hat, wobei der Flansch (116) an der Eingangsmasse an einer tief in der Schale liegenden Stelle befestigt (119) ist, und die Ausgangsmasse (112) auch in die Eingangsmasse (111) eingelassen ist.

9. Schwungrad nach irgendeinem der Ansprüche 1 bis 8, **dadurch gekennzeichnet, dass** der Flansch (116) und die Nabe (115) als ein einteiliges Bauteil ausgeführt sind.

10. Schwungrad nach irgendeinem der Ansprüche 1 bis 9, **dadurch gekennzeichnet, dass** die Eingangsmasse (11) eine erste Unterbaugruppe aufweist, und eine zweite Unterbaugruppe, die die Ausgangsmasse (12), den Flansch (16), die Tragnabe (15), die Lagereinruchtung (14) und die Dämpfungseinrichtung (13) enthält, in einem zusammengebauten Zustand an der ersten Unterbaugruppe durch die Befestigungsmittel (19) befestigt ist, die den äußeren Randbereich (17) des Flansches (16) an der Eingangsmasse (11) festhalten.

11. Schwungrad nach Anspruch 10, bei dem die zweite Unterbaugruppe auch einen Kupplungsdeckel (42) enthält, der an der Ausgangsmasse (12) montiert (43) ist, wobei der Deckel (42) eine angetriebene Kupplungsscheibe (46), eine Druckscheibe (44) und eine Federeinrichtung (45) zum Einklemmen der angetriebenen Scheibe (46) zwischen die Druckscheibe (44) und die Ausgangsmasse (12) enthält.

## Revendications

1. Volant bimasse (10) comprenant une masse d'entrée (11) destinée à être reliée à un moteur de véhicule et une masse de sortie (12) destinée à être reliée à une transmission de véhicule, un flasque (16) en extension radiale vers l'intérieur et fixé (19) à une partie périphérique externe (18) de la masse d'entrée (11), des moyens d'amortissement de torsion (13) agissant entre le flasque (16) et des moyens de réaction (27, 28) qui pivotent avec la masse de sortie (12), et un moyeu de support (15) s'étirant axialement, fixé à une partie périphérique interne (21) du flasque (16), la masse de sortie (12) étant supportée par des moyens porteurs (14) partant du moyeu (15), le volant **se caractérisant en ce que** le flasque est placé dans l'axe entre les masses d'entrée et de sortie (11, 12).

2. Volant selon la revendication 1, dans lequel les moyens d'amortissement (13) comprennent des moyens élastiques à action circonférentielle (23, 24) agissant entre le flasque (16) et les moyens de réaction (27, 28) qui pivotent avec la masse de sortie (12).

3. Volant selon la revendication 1 ou 2, **caractérisé en ce que** les moyens de réaction comprennent des plaques latérales parallèles (27, 28) placées de chaque côté du flasque (16) et reliées (29) à la masse de sortie (12).

4. Volant selon l'une quelconque des revendications 1 à 3, **caractérisé en ce que** la liaison avec la masse de sortie (12) s'effectue par l'intermédiaire de rivets d'écartement (29) qui maintiennent les plaques latérales parallèles (27, 28) à distance l'une de l'autre de chaque côté du flasque (16).

5. Volant selon la revendication 4, **caractérisé en ce que** les rivets d'écartement (29) s'étirent à travers des fentes (40) s'étirant sur la circonférence du flasque (16) et peuvent aussi jouer le rôle de butées d'arrêt limitant la rotation respective des masses du volant (11, 12) lorsque les rivets d'écartement (29) entrent en contact avec les extrémités (41) des fentes (40).

6. Volant selon l'une quelconque des revendications 1 à 5, **caractérisé en ce qu'**il comprend des moyens d'amortissement de friction (30) dont le rôle est d'amortir la rotation respective des masses (11, 12).

7. Volant selon la revendication 6, **caractérisé en ce que** les moyens d'amortissement de friction (30) comprennent des moyens élastiques à action axiale (36) agissant entre le flasque (16) et l'une (27) des plaques latérales pour incliner ladite une plaque latérale (27) à l'opposé du flasque (16) et, par conséquent, tirer l'autre plaque latérale (28) vers le flasque (16), et une première et seconde plaques de friction (31, 32) placées dans l'axe entre l'autre plaque latérale (28) et le flasque (16), ladite première plaque de friction (31) étant reliée en rotation à la masse d'entrée (11) et ladite seconde plaque de friction (32) étant reliée en rotation à la masse de sortie (12), dans lequel les première et seconde plaques de friction (31, 32) sont amenées en contact axial de friction par les moyens élastiques à action axiale (36), pour produire un amortissement de friction sur la rotation respective des masses du volant (11, 12).

8. Volant selon l'une quelconque des revendications 1 à 7, **caractérisé en ce que** la masse d'entrée (111) est profondément imbriquée dans le flasque (116) fixé (119) à la masse d'entrée au niveau d'un emplacement profondément imbriqué, la masse de sortie (112) se trouvant également en retrait à l'intérieur de la masse d'entrée (111).

9. Volant selon l'une quelconque des revendications 1 à 8, **caractérisé en ce que** le flasque (116) et le moyeu (115) forment un élément monobloc.

10. Volant selon l'une quelconque des revendications 1 à 9, **caractérisé en ce que** la masse d'entrée (11) comprend un premier sous-ensemble, et un second sous-ensemble englobant la masse de sortie (12), le flasque (16), le moyeu de support (15), les moyens porteurs (14) et les moyens d'amortissement (13) est fixé, à l'état assemblé, au premier sous-ensemble par les moyens de fixation (19) qui fixent la zone périphérique externe (17) du flasque (16) à la masse d'entrée (11).

11. Volant selon la revendication 10, dans lequel le second sous-ensemble comprend également un carter d'embrayage (42) monté (43) sur la masse de sortie (12), le carter (42) supportant un disque d'embrayage (46), un plateau de pression (44) et des moyens élastiques (45) destinés à amortir le disque d'embrayage (46) entre le plateau de pression (44) et la masse de sortie (12).
